# FASCICULE DE BREVET EUROPEEN

(11) **EP 4 261 006 B1**
(45) Date de publication et mention de la délivrance du brevet: **13.11.2024**
(21) Numéro de dépôt: 23159164.5
(22) Date de dépôt: 28.02.2023
(51) Int. Cl.: B29C 49/12, B29C 49/66, B29C 49/06, B29K 67/00, B29L 31/00

(54) **TIGE D'ÉTIRAGE ET DE REFROIDISSEMENT POUR LA FORMATION DE RÉCIPIENTS**
ZIEH- UND KÜHLSTAB ZUR HERSTELLUNG VON BEHÄLTERN
STRETCHING AND COOLING ROD FOR FORMING CONTAINERS

(30) Priorité: 13.04.2022 FR 2203421
(43) Date de publication de la demande: 18.10.2023
(73) Titulaire: Sidel Participations, 76930 Octeville-sur-Mer (FR)
(72) Inventeur: NAVEAU, Laurent, 76930 Octeville-sur-Mer (FR); BECHEN, Régis, 76930 Octeville-sur-Mer (FR)
(74) Mandataire: Sidel Group

(56) Documents cités:
- EP-A1- 0 036 844
- JP-A- 2001 088 202
- US-A- 5 213 752
- US-A1- 2011 193 271
- US-A1- 2021 107 205

## Description

**Domaine technique** : La présente invention relève du domaine de la fabrication de récipients par soufflage ou étirage-soufflage à partir de préformes en matériau thermoplastique, telle que par exemple le polyéthylène téréphtalate, ci-après « PET ». Elle a plus particulièrement pour objet une tige d'étirage et de refroidissement destinée à être mise en oeuvre dans une technique d'étirage soufflage pour la formation de récipients. Elle a également pour objet un procédé de fabrication de récipients mettant en oeuvre la tige d'étirage et de refroidissement selon l'invention. Une tige d'étirage selon l'art antérieur et un procédé mettant en oeuvre une telle tige sont décrits dans les documents US2021/107205A1, US2011/193271A1, US5213752A et EP0036844A1.

**Etat de la technique** : Il est connu de former des récipients en matériau thermoplastique par étirage soufflage de préformes préalablement chauffées à une température suffisante pour en ramollir les parois.

A cet effet, on utilise un dispositif de formage qui comporte un moule présentant une cavité conformée à l'empreinte du récipient à obtenir. La préforme préalablement chauffée est reçue dans la cavité. Puis, ses parois sont soumises à un étirage dit "biaxial" pour venir épouser l'empreinte du moule. Pour ce faire, la préforme est étirée axialement au moyen d'une tige d'étirage pour provoquer l'expansion axiale de la préforme. Simultanément à cette opération d'étirage, un fluide sous pression est injecté dans la préforme de manière à provoquer l'expansion radiale de la paroi.

Un tel procédé de formage est bien connu. Pour que le récipient final présente un fond parfaitement moulé, il est préférable que la tige d'étirage soit adaptée pour garantir une épaisseur satisfaisante de la paroi du récipient. Une mauvaise répartition de la matière est un défaut récurrent constaté sur les récipients produits par un procédé de moulage et étirage/soufflage. Il ne s'agit pas nécessairement de veiller à ce que l'épaisseur de la paroi du récipient soit constante, car dans certains cas il peut être souhaitable d'épaissir certaines zones, en particulier celles destinées à subir des contraintes importantes (notamment à proximité du fond). II s'agit plutôt de veiller à ce que l'épaisseur de matière corresponde au cahier des charges du récipient, tel que défini en fonction de sa forme et de son utilisation.

Un défaut de matière localisée au centre peut, en outre, générer des zones plus chaudes et sensibles à l'affaissement. Afin donc de parfaire la structure du fond soufflé, et de figer la matière par rapport à l'empreinte du moule, une étape additionnelle de refroidissement interne peut s'avérer très utile. Cette étape consiste à générer un refroidissement du fond par la tige d'étirage, à la fin de la phase de soufflage, sur un temps très court, à des endroits très localisés du fond.

Des procédés ont ainsi été mis au point pour favoriser une répartition de la matière adaptée à des cahiers des charges exigeants.

En outre, dans le domaine de la fabrication de récipients par moulage et étirage/ soufflage, il est fait de plus en plus recours à du PET recyclé, pour des raisons environ-nementales. Ce matériau augmente encore le problème de distribution de la matière car il présente des propriétés différentes d'absorption de chauffe : la maîtrise du refroidissement du récipient ainsi formé est donc encore plus cruciale.

Par ailleurs, malgré les précisions apportées aux procédés d'étirage soufflage, il existe donc encore des problèmes de déformation du fond après démoulage de la bouteille, notamment en raison d'un manque de maîtrise de la phase de refroidissement.

**Arrière-plan technique** : Le document JP2001088202 propose une tige d'étirage et de refroidissement, ayant des orifices spécifiquement prévus pour refroidir le fond d'une préforme. Ces orifices sont situés sur le corps de la tige, au-dessus de l'embout formé à l'extrémité de ladite tige. L'embout est prévu pour se placer au contact du fond de la préforme pendant l'étirage, puis légèrement en retrait lors de la phase de refroidissement, pour laisser le gaz s'échapper des orifices et, par cet effet, refroidir le fond, à la fin de la phase de soufflage. Néanmoins, dans cette configuration, le gaz de refroidissement s'échappe de manière peu contrôlée, et n'est pas dirigé de manière précise, de façon localisée vers le fond du récipient obtenu.

Résumé de l'invention : Les solutions actuelles ne sont pas satisfaisantes et il existe un besoin pour améliorer encore l'étape de refroidissement afin d'obtenir des récipients de meilleure qualité.

L'invention vise à résoudre ce problème et propose, à cet effet, une tige d'étirage qui assure un étirage de la préforme suivant son axe, en évitant les contacts indésirables entre l'extérieur de la tige et l'intérieur du corps de la préforme, tout en améliorant la distribution du gaz de refroidissement, notamment sur le fond du récipient obtenu. La trajectoire du gaz de refroidissement est contrôlée et maîtrisée grâce à l'utilisation d'une tige d'étirage conformément à l'invention.

A cet effet, l'invention concerne une tige d'étirage pour une unité de moulage pour la fabrication d'un récipient à partir d'une préforme, ladite tige d'étirage s'étendant longitudinalement, parallèlement à un axe principal Y, comprenant
- un corps de forme cylindrique ou tubulaire ;
- une extrémité distale dans le prolongement dudit corps ;
- au moins un canal intérieur pour permettre la circulation d'un gaz de refroidissement jusqu'à ladite extrémité distale
- un méplat situé à l'extrémité distale de la tige d'étirage ;
- un embout saillant à partir dudit méplat et
- une pluralité d'orifices, lesdits orifices étant en communication fluidique avec ledit canal intérieur et étant répartis autour dudit embout sur ledit méplat.

Ladite tige d'étirage est caractérisée en ce qu'elle comprend une jupe annulaire dans le prolongement dudit corps, au niveau de ladite extrémité distale, ladite jupe ayant une hauteur inférieure à la hauteur dudit embout.

Avantageusement, les bords de la jupe et/ou l'extrémité de l'embout saillant de la tige d'étirage sont arrondis.

Selon des modes de réalisation, le corps extérieur et la jupe comprennent une seule pièce.

Avantageusement, l'embout de la tige d'étirage est de forme conique.

Dans des modes de réalisation, le méplat s'étend orthogonalement à l'axe principal Y.

Dans des modes de réalisation, les orifices sont orientés vers l'extérieur dans la direction de l'axe principal Y, et ce d'un angle compris en 1 et 50 degrés, préférentiellement d'un angle de 30 degrés.

Avantageusement, la jupe annulaire de la tige d'étirage présente une forme crénelée.

Dans des modes de réalisation, la jupe annulaire de la tige d'étirage présente une forme crénelée avec des bords de crêtes arrondis et convexes et des bords de creux concaves.

Avantageusement, le méplat de la tige d'étirage présente un évidement en forme de rosace intérieure.

L'invention concerne encore un procédé de fabrication d'un récipient par étirage soufflage mettant en oeuvre la tige d'étirage selon l'invention, comprenant au moins les étapes suivantes de
- placement d'une préforme préalablement chauffée dans un moule de soufflage présentant, en position de fermeture, une cavité de moulage formant l'empreinte du récipient à souffler ;
- fermeture dudit moule de soufflage ;
- soufflage de ladite préforme dans le moule de soufflage par l'intermédiaire d'une tuyère de soufflage et, de manière sensiblement simultanée, une étape d'étirage de ladite préforme par insertion de la tige d'étirage à l'intérieur de ladite préforme en prenant appui contre le fond de ladite préforme de manière à faciliter l'allongement axial de ladite préforme ;
- refroidissement de l'intérieur dudit récipient ainsi formé par injection d'air par l'intermédiaire de ladite tige d'étirage, pourvue de ladite pluralité d'orifices prévus à cet effet.
- remontée de ladite tige d'étirage ;
- extraction dudit récipient soufflé par ouverture dudit moule de soufflage.

Brève description des figures : L'invention sera mieux comprise grâce à la description ci-dessous, qui se base sur des modes de réalisations possibles, expliqués de façon illustrative et nullement limitative, en référence avec les figures annexées, dans lesquelles :
- [Fig.1] représente schématiquement une vue simplifiée de dessus d'un exemple de réalisation d'une machine de moulage de type rotative, illustrant notamment les unités de moulage (sans les moyens de soufflage et d'étirage) réparties autour d'un carrousel, lesdites unités de soufflage étant, en fonction de leur position relative par rapport à l'entrée ou la sortie de la machine, en position ouverte ou en position fermée ;
- [Fig.2] représente schématiquement une vue partielle en perspective d'une des unités de moulage de la machine selon l'exemple de réalisation de la [Fig.1], illustrant notamment, hors de l'unité en position ouverte, une vue éclatée d'un moule réalisé en trois parties, à savoir deux demi-moules et un fond de moule ;
- [Fig.3] représente schématiquement une vue selon une coupe médiane longitudinale verticale d'une unité de moulage de la machine, au cours d'une première étape d'un cycle de soufflage d'un récipient, montrant notamment l'insertion de l'extrémité distale de la tige dans une préforme enfermée au sein d'un moule ;
- [Fig.4] représente schématiquement une vue similaire à la [Fig.3], au cours d'une autre étape suivante en fin du cycle de soufflage, montrant notamment l'extrémité distale de la tige introduite au sein du récipient soufflé et s'étendant jusqu'au fond dudit récipient soufflé ;
- [Fig.5] représente schématiquement une vue similaire à la [Fig.3], au cours d'une autre étape suivante du cycle de soufflage au moment du refroidissement, montrant notamment l'embout saillant de la tige d'étirage ;
- [Fig.6] représente schématiquement une vue de détail de la [Fig.3], avec la tige d'étirage positionnée au niveau du fond de la préforme ;
- [Fig.7] représente schématiquement une vue en perspective d'un exemple de réalisation de l'extrémité distale de la tige d'étirage, montrant notamment une jupe annulaire présentant des bords arrondis ;
- [Fig.8] représente schématiquement une vue selon une coupe médiane longitudinale du premier mode de la [Fig.7] ;
- [Fig.9] représente schématiquement une vue selon une coupe médiane longitudinale d'un deuxième mode de réalisation de l'extrémité distale de la tige d'étirage, montrant notamment la jupe annulaire présentant des orifices débouchant au travers du méplat avec une direction selon un angle par rapport à l'axe longitudinal de ladite tige, ainsi qu'en outre la jupe annulaire présentant des bords droits et biseautés ;
- [Fig. 10] représente schématiquement une vue selon une coupe médiane longitudinale d'un troisième mode de réalisation de l'extrémité distale de la tige d'étirage, montrant notamment la jupe annulaire présentant une forme crénelée avec des bords de crêtes arrondis et convexes et des bords de creux concaves ;
- [Fig.11] représente schématiquement une vue selon une coupe médiane longitudinale d'un quatrième mode de réalisation de l'extrémité distale de la tige d'étirage, montrant notamment la jupe annulaire avec un profil convergent depuis le corps de ladite tige vers son extrémité distale.
- [Fig.12] représente schématiquement une vue de côté d'un mode de réalisation de l'extrémité distale de la tige d'étirage, montrant notamment une jupe avec un bord annulaire inscrit dans un même plan, ainsi que l'embout et le méplat en pointillés ;
- [Fig.13] représente schématiquement une vue de côté encore d'un autre mode de réalisation, montrant une jupe avec des bords crénelés droits, avec des crêtes et des creux ;
- [Fig.14] représente schématiquement une vue de côté d'un mode de réalisation, montrant une jupe avec des bords crénelés arrondis ; et
- [Fig.15] représente schématiquement une vue en perspective d'un exemple de réalisation de l'extrémité distale de la tige d'étirage, montrant notamment un évidement en forme de rosace au niveau du méplat.

Description détaillée de l'invention : Dans la suite de la description, des éléments présentant une structure identique ou des fonctions analogues seront désignés par une même référence.

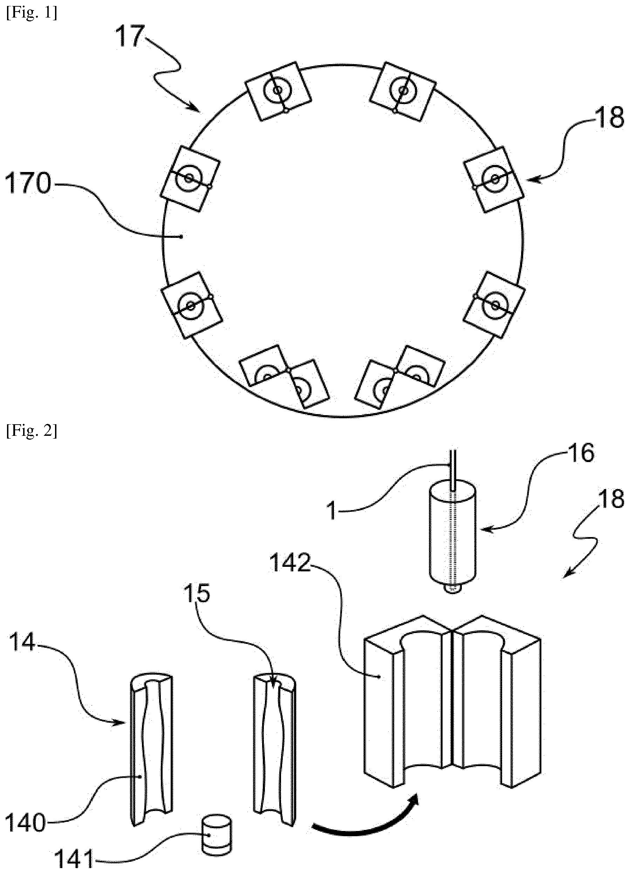

L'invention est conçue pour être mise en oeuvre dans une installation de fabrication de récipients 2. Une telle installation comporte, usuellement, une machine de moulage telle que représentée en [Fig.1], comportant au moins des unités de moulage 18, chaque unité de moulage 18 comportant au moins des moyens de soufflage intégrant une tige d'étirage 1, ledit moule 14 comportant au moins deux demi-moules 140 qui comportent chacun une face interne de moulage et qui sont respectivement montés sur des supports 142 mobiles autour d'un axe Y, entre au moins une position ouverte et une position fermée de l'unité de moulage 18, dans laquelle lesdites faces internes desdits au moins deux demi-moules 140 joints délimitent ensemble une cavité de moulage 15 du récipient 2.

En pratique, les moules de soufflage 14 sont répartis circulairement, sous la forme d'un carrousel 170, comme visible en [Fig.1], et surmontés par des installations de soufflage respectives. En pratique, toujours, et comme visible sur la [Fig.2], le corps de l'installation de soufflage s'étend sensiblement verticalement au-dessus du moule et sensiblement coaxialement à la cavité 15 de moulage du moule de soufflage 14.

La [Fig.2] représente schématiquement une vue en perspective d'une des unités de moulage 18 de la machine selon l'exemple de réalisation de la [Fig.1], illustrant notamment, hors de l'unité en position ouverte, une vue éclatée d'un moule 14 réalisé en trois parties, à savoir deux demi-moules 140 et un fond de moule 141.

Tous ces éléments sont bien connus de l'Homme du métier et ne sont pas décrits en détail pour une meilleure compréhension de l'invention.

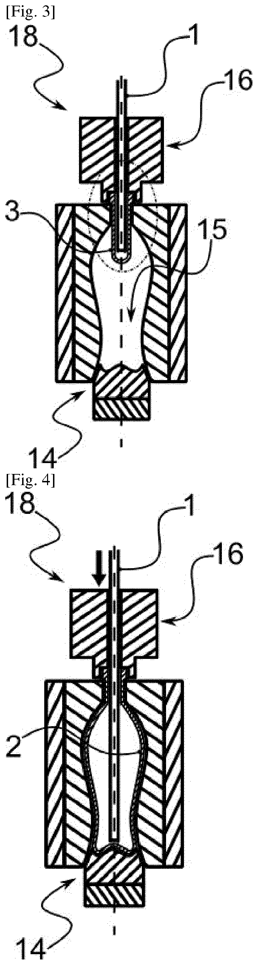

On se réfère à la [Fig.3], montrant un premier mode de réalisation d'une tige 1 conforme à l'invention, en vue en coupe partielle longitudinale, qui est mis en oeuvre avec une préforme 3 en PET ou en PET recyclé, destinée à être étirée et soufflée dans un des moules de soufflage 14 d'une installation décrite brièvement ci-dessus, de manière à former un récipient 2, tel qu'une bouteille.

Sur la [Fig.3], la tige 1 d'étirage est en position haute et en cours d'insertion dans la préforme 3. La tige 1 est conçue pour être montée dans le corps de l'installation de soufflage évoquée également ci-dessus. Ladite tige d'étirage 1 s'étend longitudinalement, parallèlement à l'axe principal Y. La tige d'étirage 1 selon l'invention est une tige d'étirage creuse, qui assure alors une double fonction, une fonction d'étirage d'une part et une autre fonction de refroidissement du récipient d'autre part. Elle présente, pour ce faire, une première extrémité dite proximale (non représentée) apte à être solidarisée à un dispositif de déplacement interne à l'installation de fabrication.

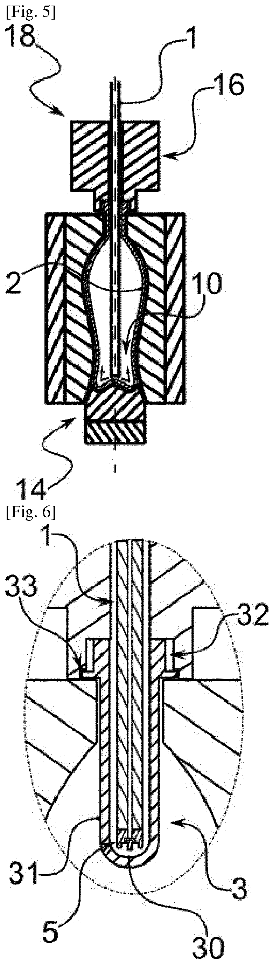

Comme visible sur la [Fig.6], la préforme 3 comporte, de façon en soit classique, un corps de forme allongé, tubulaire, d'axe Y, limité par une paroi 31 solidaire en partie haute d'un col 32 fileté et en partie basse d'un fond 30 sensiblement hémisphérique.

Entre le col 32 et le corps de la préforme, une collerette 33 radiale fait saillie vers l'extérieur de la préforme 3.

De manière générale, la préforme 3 illustrée en [Fig.6] présente une symétrie de révolution autour de son axe Y.

Lors de la mise en place de la préforme dans l'installation de soufflage, l'axe Y de la tige 1 est sensiblement confondu avec l'axe de révolution de la préforme 3. Dans ce qui suit, on désignera donc indifféremment par Y l'axe de la tige 1 ou celui de la préforme 3.

Dans ce qui suit, on qualifiera de « vertical » toute direction parallèle à l'axe de révolution de la tige et de « transversal » toute direction perpendiculaire à l'axe de révolution de la tige.

Comme représenté en [Fig.3], ou encore en [Fig.4], la tige d'étirage 1 comprend un corps 4 cylindrique ou tubulaire. Dans des modes de réalisation, le corps 4 de la tige d'étirage 1 peut présenter un épaulement, c'est-à-dire présenter deux sections longitudinales ayant deux diamètres différents. Cela est particulièrement avantageux pour le soufflage de préformes de faible diamètre.

Le corps 4 comprend également un canal intérieur 6 central s'étendant axialement et communiquant avec une pluralité d'orifices 9 par lesquels un gaz de refroidissement 10, en particulier de l'air, est injecté à l'intérieur du récipient 2 fabriqué afin de le refroidir. Les orifices 9 sont donc en communication fluidique avec le canal intérieur 6.

Dans le prolongement du corps 4, au niveau de l'extrémité distale 5, la tige d'étirage 1 comprend un méplat 7. Un embout 8 fait saillie à partir de ce méplat 7.

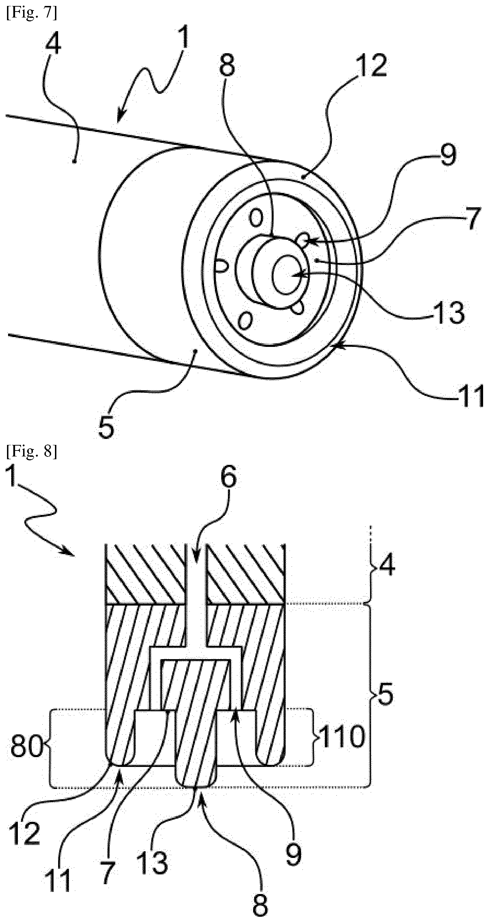

Comme représente en [Fig.7], la tige d'étirage 1 comprend en outre, une jupe annulaire 11 dans le prolongement de son corps 4.

La [Fig.4] représente schématiquement une autre étape d'un cycle de soufflage, dans laquelle la tige d'étirage 1 est en position basse et donc placée au fond de la préforme 3 pendant l'étape de soufflage. Durant cette étape, la préforme 3 devient un récipient 2.

La [Fig.5] représente schématiquement un mode de réalisation d'une autre étape d'un cycle de soufflage, dans laquelle la tige d'étirage 1, toujours en position basse, réalise l'étape de refroidissement, dite phase de balayage, du récipient 2 ainsi formé par injection du gaz de refroidissement 10. Le gaz de refroidissement 10 va alors traverser le canal intérieur 6 de la tige d'étirage 1 pour venir se diffuser localement et précisément sur le fond du récipient 2. L'injection du gaz de refroidissement 10 est représenté sous la forme de flèches sur la [Fig.5].

Dans des modes de réalisation, et comme représenté sur la [Fig.7], le diamètre de la jupe annulaire 11 est égal au diamètre du corps 4 de la tige d'étirage 1. Dans cette configuration avantageuse, le gaz de refroidissement 10 est dirigé de manière très localisée.

Dans des modes de réalisation, le corps 4 extérieur et la jupe annulaire 11 sont obtenus d'un seul tenant. En d'autres termes, ils forment une seule et même pièce.

Selon d'autres modes de réalisation, le corps 4 extérieur et la jupe annulaire 11 sont deux pièces séparées.

Les modifications structurelles de la tige d'étirage 1 ont pour effet avantage de diriger le gaz de refroidissement 10 vers le fond du récipient 2, sur l'ensemble de sa surface inférieure, et ainsi d'améliorer l'étape de refroidissement.

L'on peut voir en [Fig.7] un mode de réalisation dans lequel les orifices 9, en communication avec le canal intérieur 6, sont arrangés et répartis sur le méplat 7, autour dudit embout 8. Les orifices 9 permettent au gaz de refroidissement 10 d'être injecté sur le fond du récipient soufflé. Les orifices 9 sont disposés sur le méplat 7, et sur l'ensemble de sa circonférence, permettant donc l'injection du gaz de refroidissement 10 depuis le canal intérieur 6 jusqu'à l'intérieur du récipient 2 soufflé.

Les orifices 9 sont par exemple de forme cylindrique et ont de préférence un diamètre compris entre 0,3 et 3 millimètres (mm). Ils peuvent également être d'une autre forme, par exemple de forme oblongue.

Selon un mode de réalisation préféré, la surface d'injection est comprise entre 3 et 6 millimètres carrés (mm²) et n'excède pas 20 millimètres carrés (mm2). La surface d'injection correspond à la somme des diamètres des orifices 9. Elle représente la quantité de gaz de refroidissement 10 pouvant être injectée grâce à la configuration de la tige 1, comprenant des orifices 9 jouant le rôle d'orifices de restriction. Ainsi, grâce à l'invention, il est possible d'obtenir un refroidissement interne du récipient 1 formé tout en minimisant la consommation de gaz de refroidissement 10. La tige d'étirage 1 présente en effet un volume mort très faible et une conception optimisée pour le refroidissement interne d'un récipient 2 soufflé.

La tige d'étirage 1 présente donc une pluralité d'orifices 9 disposés sur le méplat 7. L'embout 8 saillant peut être de toute forme. En particulier, ledit embout 8 peut être de forme conique, de forme conique arrondie, de forme ovoïde, de forme hémisphérique, etc.

Selon un mode de réalisation préféré, comme représenté en [Fig.7], le méplat 7 est perpendiculaire au corps 4 de la tige d'étirage 1. Cela permet une meilleure distribution et un meilleur contrôle du gaz de refroidissement 10 qui s'échappe alors des orifices 9 de manière homogène.

La [Fig.8] représente schématiquement une vue selon une coupe médiane longitudinale d'un exemple de réalisation de l'extrémité distale de la tige 1 d'étirage, montrant notamment une jupe annulaire 11 présentant des bords arrondis et un embout 8 de forme cylindrique. Dans ce mode de réalisation, les bords 12 de la jupe annulaire 11 sont arrondis. Ceci est particulièrement avantageux car il permet d'éviter tout risque de déchirement si lesdits bords 12 venaient à toucher la paroi de la préforme 3, par exemple lors de la phase d'étirage. Cette variante de bords 12 arrondis de la jupe 11 peut également s'appliquer aux autres modes de réalisation de l'invention.

Dans cet exemple de réalisation, la jupe annulaire 11 a le même diamètre que le diamètre du corps 4 de la tige d'étirage 1. Sur le méplat 7 sont disposés, autour de l'embout 8 saillant, cinq orifices 9.

En outre, comme visible sur la [Fig.8], la jupe annulaire 11 a une hauteur 110 inférieure à la hauteur 80 de l'embout 8 de sorte que ledit embout 8 fait saillie de la jupe annulaire 11. En d'autres termes, l'extrémité distale de la tige d'étirage 1 est formée par l'embout 8 et la jupe annulaire 11 est un prolongement du corps 4 extérieur par rapport au méplat 7. Cela permet de diriger le gaz de refroidissement 10 de manière contrôlée lorsqu'il quitte le canal intérieur 6 à travers les orifices 9.

Dans un mode de réalisation préféré, la hauteur 110 de la jupe annulaire 11 est inférieure à la hauteur 80 de l'embout 8 d'une valeur comprise entre 0,5 et 4 millimètres (mm), encore plus préférentiellement d'une valeur de 1mm.

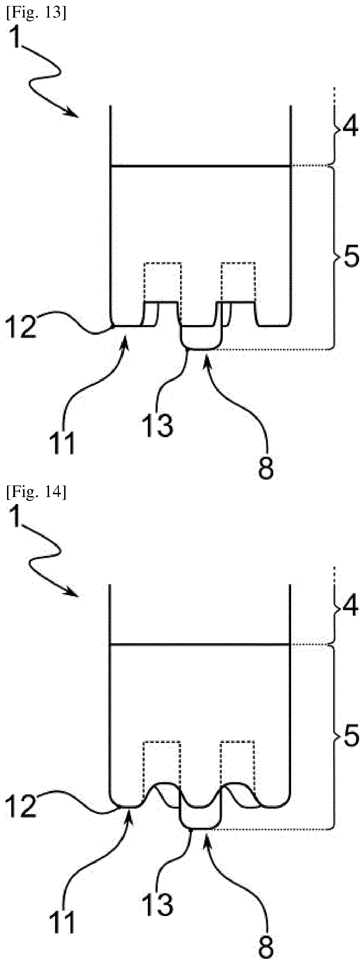

Dans des modes de réalisation, la hauteur 110 de la jupe annulaire 11 varie sur l'ensemble de sa circonférence. Par exemple, la jupe annulaire 11 peut avoir des bords dentelés ou festonnés, et donc présenter des creux et des crêtes, comme visible sur la [Fig.13]. Néanmoins, dans ce cas, la hauteur 110 reste inférieure à la hauteur 80 de l'embout 8.

La [Fig.8] représente schématiquement une vue selon une coupe médiane longitudinale du premier mode de réalisation de la [Fig.7]. Le canal intérieur 6 se divise en différentes sections pour déboucher sur les orifices 9.

L'étape de refroidissement est une étape additionnelle dans un procédé de fabrication de récipients en PET et en PET recyclé (« rPET »). Le flux du gaz de refroidissement 10 est représenté schématiquement à la [Fig.5] par des flèches. Cette étape de refroidissement permet notamment de réduire la température interne du récipient obtenu, et a pour but de limiter le transfert de chaleur de l'interne vers l'externe après la sortie du récipient 2 obtenu du moule. Cela permet également de limiter l'effondrement du fond, cet effondrement ayant généralement un impact négatif au stress, ce qui augmente le risque de rebuts. En effet, un fond présentant une température trop élevée aura tendance à s'affaisser lors de l'étape de sortie du moule. Le récipient 2 obtenu peut alors potentiellement présenter des fuites ou d'autres défauts. La présence de la jupe annulaire 11 selon l'invention a pour avantage d'améliorer considérablement l'étape de refroidissement en amplifiant l'action du gaz de refroidissement 10 injecté, le gaz étant dirigé de manière localisée là où sa présence est nécessaire. Cela permet alors d'améliorer considérablement l'étape de refroidissement du récipient 2 obtenu, et donc de réaliser un refroidissement optimal, même lorsque, pour des raisons de cadence, la durée de l'étape de refroidissement doit être très courte.

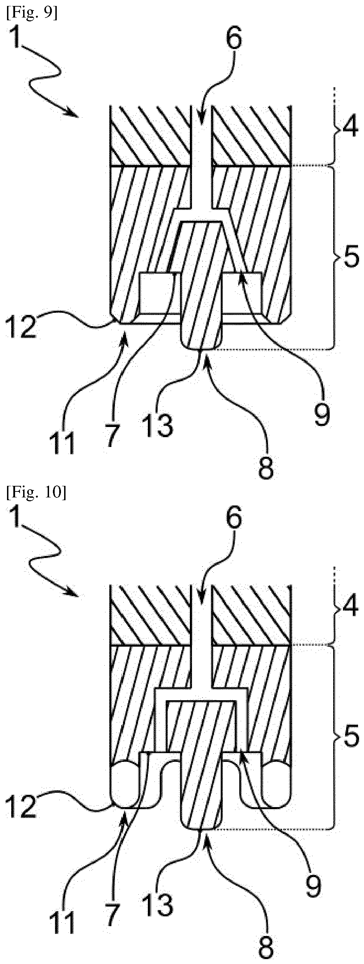

Dans des modes de réalisation, comme représenté en [Fig.9], les orifices 9 sont orientés de biais, vers l'extérieur dans la direction de l'axe principal Y, vers le fond de l'ébauche sur une déviation de 1 à 50 degrés.

Dans un mode de réalisation préféré, les orifices 9 sont orientés vers l'extérieur dans la direction de l'axe principal Y, d'une déviation de 30 degrés.

L'orientation des orifices permet au gaz de refroidissement 10 de se répartir de manière homogène vers le fond de la préforme 3 et donc vers le fond du récipient 2 ainsi formé, c'est-à-dire sur l'ensemble de sa surface. En outre, cela permet d'améliorer encore le refroidissement du fond, là où ce dernier présente les températures les plus élevées, et donc là où des zones de stress, favorisées par son affaissement, sont à même de se développer.

Dans un mode de réalisation préféré, la jupe 11 présente des bords arrondis et les orifices 9 de la tige sont orientés de biais.

Dans des modes de réalisation, la jupe annulaire 11 de la tige d'étirage 1 présente des bords droits et biseautés. Ce mode de réalisation est illustré en [Fig.9].

Dans un mode de réalisation illustré en [Fig.10], la jupe annulaire 11 présente une forme crénelée avec des bords de crêtes arrondis et convexes et des bords de creux concaves.

Dans des modes de réalisation où la jupe annulaire 11 présente des crêtes et des creux, les orifices 9 peuvent être alignés à un creux ou à une crête. Selon un mode de réalisation préféré, les orifices 9 sont alignés à une crête, afin de concentrer le gaz de refroidissement sur le fond du récipient 2.

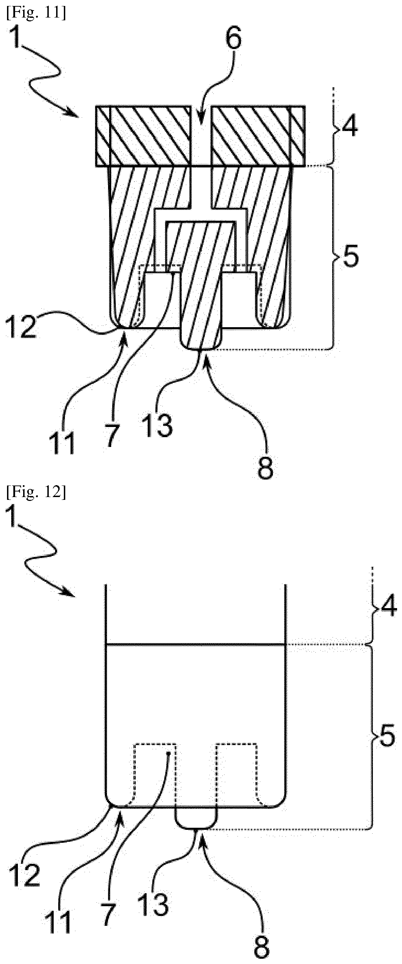

Dans une autre variante, comme illustré en [Fig.11], la jupe annulaire 11 présente un diamètre convergent depuis le corps 4 de la tige 1 vers l'embout 8 saillant. En d'autres termes, son diamètre diminue vers la portion extrême libre et la jupe annulaire 11 a donc une forme rétrécie. La jupe annulaire 11 présente une section qui diminue à partir du méplat 7, jusqu'à son extrémité libre distale.

Selon une autre variante, non représentée, le diamètre de la jupe annulaire 11 est supérieur au diamètre du corps 4 de la tige d'étirage 1. La jupe annulaire 11 a alors une forme évasée. On comprendra par « forme évasée » une forme dont la section croît. Ainsi, une portion extrême libre de jupe annulaire 11 de forme évasée signifie que la portion extrême de ladite jupe présente une section qui grandit à partir du méplat 7, jusqu'à son extrémité libre.

La [Fig.12] montre une autre vue de la tige 1 selon l'invention, avec une jupe 11 ayant un bord annulaire inscrit dans un même plan, ainsi que l'embout 8 et le méplat 7 en pointillés.

Les figures 13 à 15 montrent des variantes de réalisation de la jupe annulaire 11, présentant des creux et des crêtes.

La [Fig.13] montre une jupe 11 avec des bords crénelés droits, avec des crêtes et des creux, avec une hauteur 110 de jupe toujours inférieure à la hauteur de l'embout 8.

La [Fig.14] montre un exemple de réalisation dans lequel la jupe 11 présente des bords crénelés arrondis.

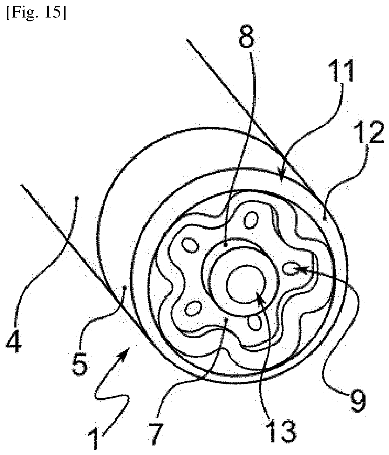

La [Fig.15] montre un mode de réalisation où la jupe 11 présente des bords lisses et de hauteur constante, mais où le méplat 7 présente un évidement en forme de rosace intérieure. La rosace intérieure est centrée dans l'évidement du méplat 7 par rapport à l'embout 8 et s'étend sur l'évidement dudit méplat 7 jusqu'aux bords de la jupe 11. Avantageusement, elle peut être creusée dans le méplat 7. Selon d'autres modes de réalisation, la rosace intérieure présente des bords. De cette manière, la jupe 11 et les bords de la rosace intérieure forment une double paroi.

Selon des modes de réalisation, les bords de la rosace intérieure ont une hauteur inférieure ou égale à la hauteur 110 de la jupe 11. Selon une variante, les bords de la rosace intérieure ont une hauteur inférieure, à la hauteur 80 de l'embout 8. Ce mode de réalisation permet avantageusement de canaliser le gaz de refroidissement 10 et d'améliorer encore sa direction vers le fond du récipient 2.

Avantageusement, chaque orifice 9 se situe au niveau d'un sommet d'une branche de la rosace intérieure.

L'invention concerne également un procédé de fabrication d'un récipient 2 par étirage soufflage mettant en oeuvre la tige 1 d'étirage précédemment décrite.

Le procédé de fabrication selon l'invention comprend au moins les étapes suivantes de :
- placement d'une préforme 3 préalablement chauffée dans un moule de soufflage 14 présentant, en position de fermeture, une cavité de moulage 15 formant l'empreinte du récipient 2 à souffler ;
- fermeture dudit moule de soufflage 14 ;
- soufflage de ladite préforme 3 dans le moule de soufflage 14 par l'intermédiaire d'une tuyère de soufflage 16 et, de manière sensiblement simultanée, une étape d'étirage de ladite préforme 3 par insertion de la tige d'étirage 1 à l'intérieur de ladite préforme 3 en prenant appui contre le fond 30 de ladite préforme 3 de manière à faciliter l'allongement axial de ladite préforme 3 ;
- refroidissement de l'intérieur dudit récipient 2 ainsi formé par injection d'un gaz de refroidissement 10, usuellement de l'air, par l'intermédiaire de ladite tige d'étirage 1, pourvue d'une pluralité d'orifices 9 prévus à cet effet ;
- remontée de ladite tige d'étirage 1 ;
- saisie du récipient 3 soufflé par des moyens de préhension extérieurs ;
- ouverture dudit moule de soufflage 14.

La [Fig.1] représente une vue de dessus qui représente schématiquement un exemple de réalisation d'une machine de moulage de type rotative et qui illustre les unités 18 de moulage (sans les moyens de soufflage et d'étirage) réparties circonférentiellement sur le carrousel 170 et qui, en fonction de leur position relative par rapport à l'entrée ou la sortie de la machine, sont en position ouverte ou en position fermée.

La fabrication d'un récipient 2 est réalisée par soufflage d'une préforme 3 chaude dans un moule 14 d'une unité 18 de moulage de l'installation au moyen d'au moins un fluide sous pression, généralement de l'air.

Dans l'exemple de réalisation, la fabrication des récipients 2 est réalisée par étirage-soufflage. Les moyens de soufflage intègrent avantageusement au moins une tige d'étirage 1.

La tige d'étirage 1 est entraînée axialement, le long de l'axe Y, en déplacement par des moyens d'entraînement associés (non représentés).

La tige d'étirage 1 est donc montée coulissante axialement pour être introduite à l'intérieur de la préforme 3 à travers l'ouverture délimitée radialement par son col 32, un espace annulaire étant laissé libre entre le col 32 et la tige 1 pour permettre le passage du fluide de soufflage.

La tige d'étirage 1 est montée mobile axialement entre au moins une première position haute et une deuxième position basse.

Dans la première position, la tige 1 s'étend hors du moule 14 et, dans la deuxième position, dite position basse, la tige 1 est déplacée vers le bas pour venir étirer axialement la préforme 3 à l'intérieur du moule 14, lors du soufflage.

Les figures 3 à 5 illustrent certaines des étapes de la fabrication d'un récipient 2 et les différentes positions de la tige d'étirage 1 durant ces étapes.

Une première étape, comme visible sur la [Fig.3] concerne donc l'introduction d'une préforme 3 dans un moule de soufflage 14. La préforme 3 a été préalablement chauffée à une température supérieure à la température de transition vitreuse de la matière (laquelle est d'environ 80°C dans le cas du PET).

Une fois la préforme 3 en position et le moule 14 fermé, comme visible sur la [Fig.4] , la tige d'étirage 1 est insérée à l'intérieur de la préforme 3, jusqu'à venir en position basse, c'est-à-dire qu'elle se positionne sur le fond de la préforme 3.

Dans un mode de réalisation préféré, la position basse de la tige d'étirage 1 correspond à une position où l'embout 8 touche le fond de la préforme 3.

Dans d'autres modes de réalisation, la position basse de la tige d'étirage 1 correspond à une position où l'embout 8 est légèrement en retrait par rapport au fond de la préforme 3.

Sensiblement simultanément à l'insertion de la tige d'étirage 1 dans la préforme 3, vient l'étape de soufflage, ou d'étirage soufflage, au cours de laquelle un fluide (par exemple de l'air) est injecté dans la préforme 3, d'abord à une pression moyenne dite de pré-soufflage, comprise entre 5 bars et 15 bars, tout en déplaçant la tige d'étirage 1 depuis sa position haute vers sa position basse déployée.

L'étape de soufflage se termine par une augmentation momentanée de la pression jusqu'à une pression élevée, supérieure à la pression de pré-soufflage pour bien plaquer la matière contre la cavité 15 du moule de soufflage 14 et ainsi lui imprimer l'empreinte du récipient 2, comme représenté sur la [Fig.4]. La pression de soufflage est supérieure ou égale à 15 bars, et par ex. d'environ 35 à 40 bars.

La tige d'étirage est maintenue en position déployée pour éviter tout glissement intempestif de la matière sur le fond du moule tant que la pression dans le récipient n'a pas atteint la pression de soufflage.

Suit une étape de refroidissement réalisée par l'injection d'un gaz de refroidissement 10 vers le fond du récipient 2 ainsi formé. La tige d'étirage 1 est alors en position basse, comme visible sur la [Fig.5].

Selon des modes de réalisation, l'étape de refroidissement, dite aussi étape de balayage, consiste à accélérer le refroidissement du récipient 2 par l'intérieur. Dans un mode de réalisation illustré en [Fig.5], la tige d'étirage 1, en position basse, réalise l'étape de refroidissement. La sortie du gaz 10 est représentée par des flèches.

Dans des modes de réalisation, la tige d'étirage 1 est déplacée axialement à l'intérieur de la cavité 15 de moulage au cours de ladite étape de refroidissement pour réaliser axialement un balayage de la cavité 15 de moulage, par exemple du haut vers le bas et réciproquement, suivant une course déterminée.

Dans des variantes, la tige d'étirage 1 est entrainée sélectivement en rotation pour réaliser un balayage circulaire de chaque cavité 15 de moulage des moules 14 refroidis au moyen dudit au moins un gaz de refroidissement 10.

La tige d'étirage 1 est par exemple entraînée de manière continue sur elle-même pour réaliser un balayage sur 360° degrés ou en variante séquentiellement.

L'entraînement en rotation de la tige d'étirage 1 s'effectue avantageusement en combinaison avec le déplacement axial de ladite tige, l'ensemble étant contrôlé en commandant sélectivement les moyens d'entraînement.

Enfin, à l'issue de l'étape de refroidissement, le moule 14 est ouvert et le récipient 2 formé en est évacué, ce qui boucle le cycle. Un nouveau cycle peut alors commencer avec l'introduction d'une nouvelle préforme 3.

La mise en oeuvre d'une tige d'étirage 1 selon l'invention permet une meilleure maîtrise de l'étape de refroidissement. Il est possible, par ce contrôle amélioré, d'augmenter les cadences de soufflage, tout en limitant la diffusion de chaleur de l'interne vers l'externe. Par ailleurs, un refroidissement amélioré du fond du récipient 2 permet de limiter les risques d'affaissement.

En outre, l'utilisation d'une telle tige d'étirage 1 offre une plus grande souplesse dans l'utilisation des préformes, notamment celles dont la forme ne serait pas parfaitement adaptée à la bouteille.

Il a enfin été constaté que l'utilisation de la tige d'étirage 1 conformément à l'invention permet d'accélérer le refroidissement du fond 30 de la préforme 3, tout en réduisant le nombre de récipients 2 de qualité insatisfaisante. Ceci est directement lié à la conception de la tige d'étirage 1, qui comprend à présent une jupe annulaire 11, permettant de diriger le gaz de refroidissement 10 de manière précise et contrôlée vers le fond du récipient 2 ainsi formé.

## Revendications

1. Tige d'étirage (1) pour une unité de moulage (18) pour la fabrication d'un récipient (2) à partir d'une préforme (3), ladite tige d'étirage (1) s'étendant longitudinalement, parallèlement à un axe principal Y, comprenant
- un corps (4) de forme cylindrique ou tubulaire ;
- une extrémité distale (5) dans le prolongement dudit corps (4) ;
- au moins un canal intérieur (6) pour permettre la circulation d'un gaz de refroidissement (10) jusqu'à ladite extrémité distale (5) ;
- un méplat (7) situé à l'extrémité distale (5) de la tige d'étirage (1) ;
- un embout (8) saillant à partir dudit méplat (7) et
- une pluralité d'orifices (9), lesdits orifices (9) étant en communication fluidique avec ledit canal intérieur (6) et étant répartis autour dudit embout (8) sur ledit méplat (7) ;
ladite tige (1) étant **caractérisée en ce qu'**elle comprend une jupe annulaire (11) dans le prolongement dudit corps (3), au niveau de ladite extrémité distale (5), ladite jupe (11) ayant une hauteur (110) inférieure à la hauteur (80) dudit embout (8).

2. Tige d'étirage (1) selon la revendication 1, **caractérisée en ce que** les bords (12) de ladite jupe (11) et/ou de l'extrémité (13) dudit embout (8) sont arrondis.

3. Tige d'étirage (1) selon la revendication 1 ou 2, **caractérisée en ce que** le corps (4) extérieur et la jupe (11) comprennent une seule pièce.

4. Tige d'étirage (1) selon l'une quelconque des revendications 1 à 3, **caractérisée en ce que** l'embout (8) est de forme conique.

5. Tige d'étirage (1) selon l'une quelconque des revendications 1 à 4, **caractérisée en ce que** le méplat (7) s'étend orthogonalement à l'axe principal Y.

6. Tige d'étirage (1) selon l'une quelconque des revendications 1 à 5, **caractérisée en ce que** les orifices (9) sont orientés vers l'extérieur dans la direction de l'axe principal Y, et ce d'un angle compris en 1 et 50 degrés, préférentiellement d'un angle de 30 degrés.

7. Tige d'étirage (1) selon l'une quelconque des revendications 1 à 6, **caractérisée en ce que** la jupe (11) annulaire présente une forme crénelée.

8. Tige d'étirage (1) selon la revendication 7, **caractérisée en ce que** la jupe (11) annulaire présente une forme crénelée avec des bords de crêtes arrondis et convexes et des bords de creux concaves.

9. Tige d'étirage (1) selon l'une quelconque des revendications 1 à 8, **caractérisée en ce que** le méplat (7) présente un évidement en forme de rosace intérieure.

10. Procédé de fabrication d'un récipient (2) par étirage soufflage mettant en oeuvre la tige d'étirage (1) selon les revendications 1 à 9, comprenant au moins les étapes suivantes de
- placement d'une préforme (3) préalablement chauffée dans un moule de soufflage (14) présentant, en position de fermeture, une cavité de moulage (15) formant l'empreinte du récipient (2) à souffler ;
- fermeture dudit moule de soufflage (14) ;
- soufflage de ladite préforme (3) dans le moule de soufflage (14) par l'intermédiaire d'une tuyère de soufflage (16) et, de manière sensiblement simultanée, une étape d'étirage de ladite préforme (3) par insertion de la tige d'étirage (1) à l'intérieur de ladite préforme (3) en prenant appui contre le fond (30) de ladite préforme (3) de manière à faciliter l'allongement axial de ladite préforme (3) ;
- refroidissement de l'intérieur dudit récipient (2) ainsi formé par injection d'air par l'intermédiaire de ladite tige d'étirage (1), pourvue de ladite pluralité d'orifices (9) prévus à cet effet.
- remontée de ladite tige d'étirage (1) ;
- extraction dudit récipient (3) soufflé par ouverture dudit moule de soufflage (14).

## Patentansprüche

1. Reckstange (1) für eine Formeinheit (18) zur Herstellung eines Behälters (2) aus einem Vorformling (3), wobei sich die Reckstange (1) längs parallel zu einer Y-Hauptachse erstreckt, umfassend
- einen zylinder- oder röhrenförmigen Körper (4);
- ein distales Ende (5) in der Verlängerung des Körpers (4);
- wenigstens einen Innenkanal (6) zur Ermöglichung des Strömens eines Kühlgases (10) bis zum distalen Ende (5);
- eine Abflachung (7), die sich am distalen Ende (5) der Reckstange (1) befindet;
- ein Endstück (8), das von der Abflachung (7) hervorsteht, und
- eine Mehrzahl von Öffnungen (9), wobei die Öffnungen (9) mit dem Innenkanal (6) in Fluidverbindung stehen und um das Endstück (8) auf der Abflachung (7) verteilt sind; wobei die Stange (1) **dadurch gekennzeichnet ist, dass** sie eine ringförmige Schürze (11) in der Verlängerung des Körpers (3) im Bereich des distalen Endes (5) umfasst, wobei die Schürze (11) eine Höhe (110) aufweist, die geringer als die Höhe (80) des Endstücks (8) ist.

2. Reckstange (1) nach Anspruch 1, **dadurch gekennzeichnet, dass** die Ränder (12) der Schürze (11) und/oder des Endes (13) des Endstücks (8) abgerundet sind.

3. Reckstange (1) nach Anspruch 1 oder 2, **dadurch gekennzeichnet, dass** der äußere Körper (4) und die Schürze (11) ein einzelnes Teil umfassen.

4. Reckstange (1) nach einem der Ansprüche 1 bis 3, **dadurch gekennzeichnet, dass** das Endstück (8) kegelförmig ist.

5. Reckstange (1) nach einem der Ansprüche 1 bis 4, **dadurch gekennzeichnet, dass** sich die Abflachung (7) orthogonal zur Y-Hauptachse erstreckt.

6. Reckstange (1) nach einem der Ansprüche 1 bis 5, **dadurch gekennzeichnet, dass** die Öffnungen (9) in der Richtung der Y-Hauptachse nach außen orientiert sind, und zwar um einen Winkel zwischen 1 und 50 Grad, vorzugsweise um einen Winkel von 30 Grad.

7. Reckstange (1) nach einem der Ansprüche 1 bis 6, **dadurch gekennzeichnet, dass** die ringförmige Schürze (11) eine zinnenartige Form aufweist.

8. Reckstange (1) nach Anspruch 7, **dadurch gekennzeichnet, dass** die ringförmige Schürze (11) eine zinnenartige Form mit abgerundeten und konvexen Scheitelkanten und konkaven Talkanten aufweist.

9. Reckstange (1) nach einem der Ansprüche 1 bis 8, **dadurch gekennzeichnet, dass** die Abflachung (7) eine Ausnehmung in Form einer Innenrosette aufweist.

10. Verfahren zur Herstellung eines Behälters (2) durch Streckblasen, bei dem die Reckstange (1) nach den Ansprüchen 1 bis 9 zum Einsatz kommt, umfassend wenigstens die folgenden Schritte
- Platzieren eines zuvor erhitzten Vorformlings (3) in einer Blasform (14), die in Schließposition eine Formhöhlung (15) aufweist, die den Abdruck des zu blasenden Behälters (2) bildet;
- Schließen der Blasform (14);
- Blasen des Vorformlings (3) in der Blasform (14) mittels einer Blasdüse (16) und, im Wesentlichen gleichzeitig, einen Schritt des Streckens des Vorformlings (3) durch Einführen der Reckstange (1) ins Innere des Vorformlings (3) durch Anlage an den Boden (30) des Vorformlings (3), um die axiale Dehnung des Vorformlings (3) zu erleichtern;
- Kühlen des Inneren des so gebildeten Behälters (2) durch Einblasen von Luft mittels der Reckstange (1), die mit der Mehrzahl von dafür vorgesehenen Öffnungen (9) versehen ist.
- Wiederhochfahren der Reckstange (1);
- Entnehmen des geblasenen Behälters (3) durch Öffnung der Blasform (14).

## Claims

1. Stretching rod (1) for a moulding unit (18) for manufacturing a container (2) from a preform (3), said stretching rod (1) extending longitudinally, parallel to a main axis Y, comprising
- a body (4) of cylindrical or tubular form;
- a distal end (5) in the extension of said body (4);
- at least an internal channel (6) to allow the circulation of a cooling gas (10) to said distal end (5);
- a flat (7) situated at the distal end (5) of the stretching rod (1);
- an end-fitting (8) protruding from said flat (7), and
- a plurality of orifices (9), said orifices (9) being fluidically connected with said internal channel (6) and being distributed around said end-fitting (8) on said flat (7);
said rod (1) being **characterized in that** it comprises an annular skirt (11) in the extension of said body (3), at said distal end (5), said skirt (11) having a height (110) less than the height (80) of said end-fitting (8).

2. Stretching rod (1) according to Claim 1, **characterized in that** the edges (12) of said skirt (11) and/or of the end (13) of said end-fitting (8) are rounded.

3. Stretching rod (1) according to Claim 1 or 2, **characterized in that** the outer body (4) and the skirt (11) comprise a single piece.

4. Stretching rod (1) according to any one of Claims 1 to 3, **characterized in that** the end-fitting (8) is of conical form.

5. Stretching rod (1) according to any one of Claims 1 to 4, **characterized in that** the flat (7) extends orthogonally to the main axis Y.

6. Stretching rod (1) according to any one of Claims 1 to 5, **characterized in that** the orifices (9) are oriented outward in the direction of the main axis Y, and by an angle of between 1 and 50 degrees, preferentially by an angle of 30 degrees.

7. Stretching rod (1) according to any one of Claims 1 to 6, **characterized in that** the annular skirt (11) has a crenelated form.

8. Stretching rod (1) according to Claim 7, **characterized in that** the annular skirt (11) has a crenelated form with rounded and convex peak edges and concave trough edges.

9. Stretching rod (1) according to any one of Claims 1 to 8, **characterized in that** the flat (7) has a recess in the form of an inner rosette.

10. Method for manufacturing a container (2) by stretch blow-molding implementing the stretching rod (1) according to Claims 1 to 9, comprising at least the following steps of
- placing a previously heated preform (3) in a blowing mould (14) having, in closure position, a moulding cavity (15) forming the die of the container (2) to be blown;
- closing said blowing mould (14);
- blowing said preform (3) in the blowing mould (14) via a blowing nozzle (16) and, substantially simultaneously, a step of stretching said preform (3) by inserting the stretching rod (1) into said preform (3) by bearing against the bottom (30) of said preform (3) so as to facilitate the axial elongation of said preform (3) ;
- cooling the interior of said container (2) thus formed by injection of air via said stretching rod (1), provided with said plurality of orifices (9) provided for that purpose,
- retracting said stretching rod (1);
- extracting said blown container (3) by opening said blowing mould (14)
